# EUROPEAN PATENT APPLICATION

(11) **EP 4 485 164 A1**
(43) Date of publication of application: **01.01.2025**
(21) Application number: 23923203.6
(22) Date of filing: 17.05.2023
(51) Int. Cl.: G06F 3/06

(54) **OPERATION METHOD, MEMORY SYSTEM, ELECTRONIC DEVICE AND COMPUTER-READABLE STORAGE MEDIUM**

(71) Applicant: Yangtze Memory Technologies Co., Ltd., Wuhan, Hubei 430074 (CN)
(72) Inventor: HU, Baijun, Wuhan, Hubei 430074 (CN)
(74) Representative: Gramm, Lins & Partner Patent- und Rechtsanwälte PartGmbB
(86) International application number: PCT/CN2023/094887
(87) International publication number: WO 2024/234347

(57) **Abstract**

Embodiments of the present disclosure disclose an operating method of a memory system, wherein the memory system includes a memory controller and one or more memory devices coupled to the memory controller. The operating method includes: determining one or more available sub-regions of memory regions marked as bad blocks in the memory devices; and writing a first data to be stored into the one or more available sub-regions.

## Description

### TECHNICAL FIELD

The present disclosure relates to the technical field of memory, and in particular to an operating method of a memory system, a memory system, an electronic device and a computer-readable storage medium.

### BACKGROUND

With the development of the memory system techology, the memory devices included in the memory systems are widely used to store data based on requests from a host such as computer, server, smart phone, tablet PC or other electronic devices. However, it is a big challenge in the industry with regard to how to use memory devices more efficiently.

### SUMMARY

In view of this, the present disclosure provides an operating method of a memory systam, a memory system, an electronic device and a computer-readable storage medium, which may improve utilization rate of the memory devices.

In order to achieve the above purpose, the technical solutions of the present disclosure are realized as follows:

In a first aspect, the embodiments of present disclosure provide an operating method of a memory system, the memory system comprises one or more memory devices, and the operating method comprises:
determining one or more available sub-regions of memory regions marked as bad blocks in the memory devices; and
writing a first data to be stored into the one or more available sub-regions.

In the above solution, wherein each of the available sub-regions has a corresponding health level, and writing the first data to be stored into the one or more available sub-regions comprises:
writing the first data to be stored into the one or more available sub-regions according to a priority order that the health levels of the available sub-regions are from high to low.

In the above solutions, wherein each of the available sub-regions has a corresponding health level, and writing the first data to be stored into the one or more available sub-regions comprises:
determining a storage level corresponding to the first data to be stored; and
writing the first data to be stored into the available sub-regions of a corresponding health level based on the storage level.

In the above solutions, the operating method further comprises:
evaluating each of the available sub-regions to determine a health status of each of the available sub-regions; and
determining health levels of the available sub-regions based on the health status of each of the available sub-regions.

In the above solutions, wherein determining the storage level corresponding to the first data to be stored comprises one of:
determining the storage level to which the first data to be stored belongs according to an importance degree;
determining the storage level to which the first data to be stored belongs according to a reading frequency;
determining the storage level to which the first data to be stored belongs according to a writing order.

In the above solutions, wherein writing the first data to be stored into the available sub-regions of the corresponding health level based on the storage level comprises:
obtaining a first mapping relationship, wherein the first mapping relationship comprises a corresponding relationship between the storage level and the health level; and
writing the first data to be stored into the available sub-regions of the corresponding health level based on the first mapping relationship and the storage level corresponding to the first data to be stored.

In the above solutions, wherein evaluating each of the available sub-regions to determine the health status of each of the available sub-regions comprises:
determining an erase count of each of the available sub-regions and/or a usable lifetime of each of the available sub-regions; and
determining the health status based on the erase count and/or the usable lifetime;
wherein the smaller the erase count and/or the longer the usable lifetime is, the better the health status is.

In the above solutions, wherein determining health levels of the available sub-regions based on the health status of each of the available sub-regions comprises:
obtaining a second mapping relationship, wherein the second mapping relationship comprises a corresponding relationship between the health status and the health level; and
determining the health level of each of the available sub-regions according to the second mapping relationship and the health status of each of the available sub-regions.

In the above solutions, the operating method further comprises:
maintaining a management table, wherein the management table is configured to record management information on the available sub-regions in the memory regions marked as bad blocks, and wherein the management information comprises at least address information of the available sub-regions.

In the above solutions, wherein maintaining the management table comprises:
updating, into the management table, the management information on the available sub-regions that are newly added; and
deleting, from the management table, the management information on the available sub-regions that satisfy a set condition in the management table.

In the above solutions, wherein a capacity of the available sub-regions comprises a capacity of one memory block.

In the above solutions, wherein the management table is stored in at least one of a memory of the memory controller and the memory devices.

In the above solutions, wherein the operating method further comprises:
determining a storage requirement of a second data to be stored;
checking the management table when it is determined that the storage requirement of the second data to be stored is that the second data to be stored needs to be stored in the available sub-regions;
storing the second data to be stored in the available sub-regions when the available sub-regions exist in the management table; and
storing the second data to be stored in a first memory region that does not contain a bad block mark when the available sub-regions do not exist in the management table.

In the above solutions, the operating method further comprises:
storing the second data to be stored in a second memory region that does not contain the bad block mark, if it is determined that the storage requirement of the second data to be stored is that the second data to be stored will not be stored in the available sub-regions.

In the above solutions, wherein a storage mode in the memory devices of the first data to be stored comprises one of a single level cell (SLC) mode and a multi-level cell (MLC) mode.

In a second aspect, the embodiments of present disclosure provide a memory system comprising:
a memory device configured to store data; and
a memory controller coupled to the memory device and configured to: determine one or more available sub-regions of memory regions marked as bad blocks in the memory device; and write a first data to be stored into the one or more available sub-regions.

In the above solution, wherein each of the available sub-regions has a corresponding health level, and the memory controller is further configured to: write the first data to be stored into the one or more available sub-regions according to a priority order that the health levels of the available sub-regions are from high to low.

In the above solutions, wherein each of the available sub-regions has a corresponding health level, and the memory controller is further configured to:
determine a storage level corresponding to the first data to be stored; and
write the first data to be stored into the available sub-regions of a corresponding health level based on the storage level.

In the above solutions, wherein the memory controller is further configured to:
evaluate each of the available sub-regions to determine a health status of each of the available sub-regions; and
determine health levels of the available sub-regions based on the health status of each of the available sub-regions.

In the above solutions, wherein the memory controller is further configured to one of:
determine the storage level to which the first data to be stored belongs according to an importance degree;
determine the storage level to which the first data to be stored belongs according to a reading frequency;
determine the storage level to which the first data to be stored belongs according to a writing order.

In the above solutions, wherein the memory controller is further configured to:
obtain a first mapping relationship, wherein the first mapping relationship comprises a corresponding relationship between the storage level and the health level; and
write the first data to be stored into the available sub-regions of the corresponding health level based on the first mapping relationship and the storage level corresponding to the first data to be stored.

In the above solutions, wherein the memory controller is further configured to:
determine an erase count of each of the available sub-regions and/or a usable lifetime of each of the available sub-regions; and
determine the health status based on the erase count and/or the usable lifetime;
wherein the smaller the erase count and/or the longer the usable lifetime is, the better the health status is.

In the above solutions, wherein the memory controller is further configured to:
obtain a second mapping relationship, wherein the second mapping relationship comprises a corresponding relationship between the health status and the health level; and
determine the health level of each of the available sub-regions according to the second mapping relationship and the health status of each of the available sub-regions.

In the above solutions, wherein the memory controller is further configured to:
maintain a management table, wherein the management table is configured to record management information on the available sub-regions in the memory regions marked as bad blocks, and wherein the management information comprises at least address information of the available sub-regions.

In the above solutions, wherein the memory controller is further configured to:
update, into the management table, the management information on the available sub-regions that are newly added; and
delete, from the management table, the management information on the available sub-regions that satisfy a set condition in the management table.

In the above solutions, wherein the memory system is contained in one of a solid-state hard disk (SSD) and a memory card.

In a third aspect, the embodiments of present disclosure provide an electronic device comprising:
a memory system comprising:
one or more memory devices configured to store data; and
a memory controller coupled to the memory devices and configured to control the memory devices;
wherein the memory controller is configured to:
   determine one or more available sub-regions of memory regions marked as bad blocks in the memory devices; and
   write a first data to be stored into the one or more available sub-regions; and a host coupled to the memory system and configured to control the memory system.

In a fourth aspect, the embodiments of present disclosure provide a computer-readable storage medium having stored thereon computer programs, which, when executed by a processor, perform the steps of the above methods.

The embodiments of the present disclosure provide an operating method of a memory system, a memory system, an electronic device and a computer-readable storage medium. Wherein the memory system includes one or more memory devices. The operating method includes: determining one or more available sub-regions of memory regions marked as bad blocks in the memory device; and writing a first data to be stored into the one or more available sub-regions. The operating method provided by the present disclosure improves memory utilization by determining one or more available sub-regions of memory regions marked as bad blocks and writing the first data to be stored into the one or more available sub-regions, i.e. by utilizing the available portions of a partially defective memory regions.

### BRIEF DESCRIPTION OF THE DRAWINGS

The same reference numerals in the drawings, which are not necessarily drawn to scale, may describe similar components in different views. The same reference numerals with different letter suffixes can represent different instances of similar components. The drawings generally illustrate, by way of example and not limitation, the various embodiments discussed in this document.
Fig. 1 shows a block diagram of an exemplary electronic device having a memory system;
Fig. 2 shows a schematic structural diagram of a memory controller in a memory system;
Fig. 3 shows an exemplary block diagram of a memory device;
Fig. 4 shows another exemplary block diagram of a memory device;
Fig. 5 shows a schematic structural diagram of a super memory block according to the embodiments of the present disclosure;
Fig. 6 shows another schematic structural diagram of a super memory block according to the embodiments of the present disclosure;
Fig. 7 shows a flow diagram of an operating method of a memory system according to the embodiments of the present disclosure;
Fig. 8 shows a schematic diagram of a super memory block containing available sub-regions according to the embodiments of the present disclosure;
Fig. 9 shows a schematic diagram of the usage of the available sub-regions contained in a super meomory block according to the embodiments of the present disclosure;
Fig. 10 shows the available sub-regions managed in the management table at a first time according to the embodiments of the present disclosure;
Fig. 11 shows the available sub-regions managed in the management table at a second time according to the embodiments of the present disclosure;
Fig. 12 shows the available sub-regions managed in the management table at a third time according to the embodiments of the present disclosure;
Fig. 13 shows a schematic diagram of a storage flow of a second data to be stored according to the embodiments of the present disclosure;
Fig. 14 shows a schematic structural diagram of a memory card according to the embodiments of the present disclosure; and
Fig. 15 shows a schematic structural diagram of an SSD according to the embodiments of the present disclosure.

### DETAILED DESCRIPTION

Embodiments of the present disclosure are described in more detail below with reference to the drawings. Other embodiments that may be variations of any of the disclosed embodiments may be formed by differently configuring or arranging the elements and features in the disclosed embodiments. Therefore, embodiments of the present disclosure are not limited to the embodiments set forth herein. Rather, the described embodiments are provided so that the disclosed embodiments are thorough and complete and fully convey the scope of the disclosed embodiments to those skilled in the art to which the disclosed embodiments pertain. It should be noted that references to "embodiment", "another embodiment" and the like do not necessarily refer to only one embodiment and different references to any such phrase do not necessarily refer to the same embodiment. It should be understood that although the terms such as "first", "second", "third" and the like may be used herein to identify various elements, these elements are not limited by these terms. These terms are used to distinguish one element from another having the same or similar name. Thus, the first element in one embodiment may also be referred to as a second or a third element in another embodiment without departing from the spirit and scope of the disclosed embodiments.

The drawings are not necessarily drawn to scale and in some cases may be magnified to clearly show the features of the embodiments. When an element is referred to as being connected or coupled to another element, it should be understood that the former may be directly connected or coupled to the latter or may be electrically connected or electrically coupled to the latter via one or more intermediate elements between them. It should also be understood that when an element is referred to as "between" two elements, the element may be the only element between two elements or there may also be one or more intermediate elements.

The terms used herein are for the purpose of describing specific embodiments only and are not intended to limit the disclosure. The singular form as used herein is intended to include the plural form unless the context explicitly dictates otherwise. The articles "a" and/or "an" collectively used in the embodiments of the present disclosure and the appended claims shall be construed to mean "one or more" unless otherwise noted or clearly understood from the context as singular. It should be further understood that the terms such as "includes", "including", "comprises" and "comprising" used in embodiments of the present disclosure designate the presence of the element and do not exclude the presence or addition of one or more other elements. The term "and/or" used in embodiments of the present disclosure includes any and all combinations of one or more associated listed items. All terms, including those of technical and scientific techniques, used in embodiments of the present disclosure have the same meanings as being understood by those skilled in the art to which the present disclosure pertains in view of the embodiments of the present disclosure, unless otherwise defined. It should be further understood that unless explicitly defined by the embodiments of the present disclosure, the terms such as defined in common dictionaries should be construed as having meanings consistent with their meanings in the embodiments of the present disclosure and context of the relevant art and should not be interpreted in an idealized or overly formalized manner.

Many specific details are set forth in the following description to provide a thorough understanding of the disclosure. The disclosure may be practiced without some or all of these specific details. The well-known processing structures and/or processes are not described in detail in other instances so as not to unnecessarily obscure the present disclosure. It should also be understood that in some cases it will be apparent to those skilled in the relevant art that the features or elements described with respect to one embodiment may be used alone or in combination with other features or elements of another embodiment unless otherwise specified. Embodiments of the present disclosure are described in detail below with reference to the drawings. The following description focuses on details to facilitate understanding of embodiments of the present disclosure. The well-known technical details may be omitted so as not to obscure the features and aspects of the disclosed embodiments.

Embodiments of the present disclosure are described in further detail below with reference to the drawings and specific embodiments.

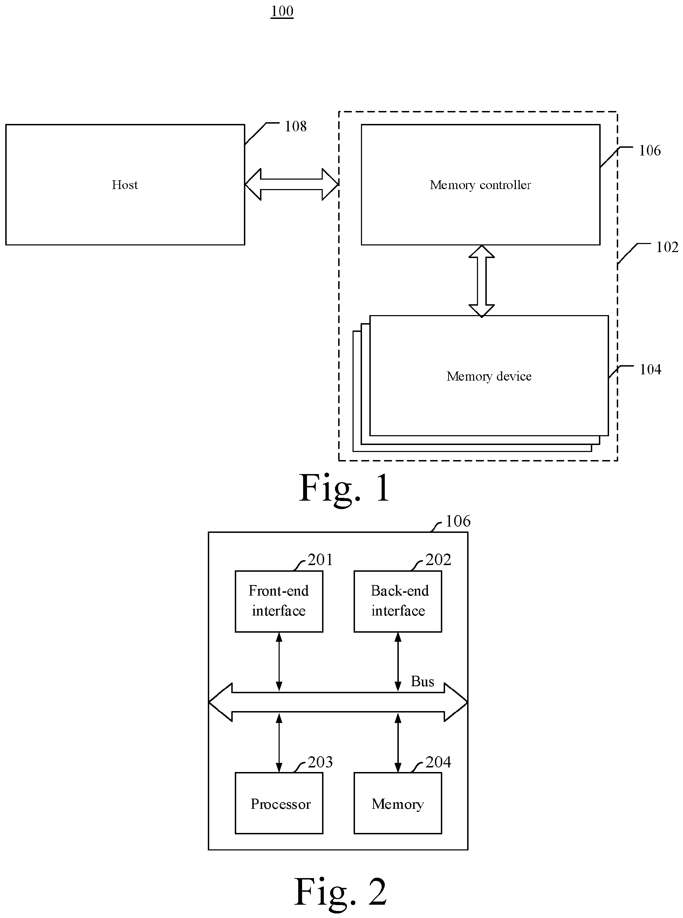

Fig. 1 shows a block diagram of an exemplary electronic device having a memory system. The electronic device 100 in Fig. 1 may be a mobile phone, desktop computer, laptop computer, tablet computer, vehicle computer, game console, printer, positioning device, wearable electronic device, smart sensor, virtual reality (VR) device, augmented reality (AR) device, or any other electronic device having a memory system therein. As shown in fig. 1, the electronic device 100 may include a host 108 and a memory system 102. The host 108 may include a processor such as a Central Processing Unit (CPU) or a System of Chip (SoC), where the SoC may be, for example, an application Processor (AP). The host 108 also includes at least one operating system (OS) that may generally manage and control functions and operations performed in the host 108. The OS may enable interoperability between the host 108 coupled to the memory system 102 and a user who needs and uses the memory system 102. The OS may support functions and operations corresponding to the user's request. For example and without limitation, according to whether the type of host 102 is a movable host, OS may be classified as general purpose OS and mobile OS. The general purpose OS may include personal OS and enterprise OS. The personal OS may be an operating system use for supporting services for general purposes, including Windows and Chrome. While the enterprise OS may be an operating system dedicated to ensuring and supporting higher performance, including Windows Server, Linux, Unix and the like. The mobile OS may be an operating system dedicated to the services or functions of mobility (such as a power saving function). Generally, the mobile OS may be an operating system such as Android, iOS, Windows Mobile. In some examples, the host 108 may include a plurality of OSs. Accordingly, the host 108 may run the plurality of OSs associated with the memory system 102. In other examples, the host 108 converts the user's request into one or more commands, and transmits the one or more commands into the memory system 102 to cause the memory system 102 to perform operations related to the one or more commands.

The memory system 102 can operate or perform specific functions or perform various internal operations in response to a request from the host 108. In some examples, the memory system 102 is capable of storing data accessed by the host 108. The memory system 102 can be used as a main memory system or an auxiliary memory system of the host 108. The memory system 102 and host 108 may be electrically coupled and in communication based on respective protocols. The memory system 102 may be implemented and packaged into different types of terminal electronics, for example including but not limited to, solid state drive (SSD), multimedia cards (MMC), embedded MMC (eMMC), reduced-size MMC (RSMMC), miniature MMC, secure digital (SD) cards, mini-SD, micro-SD, universal serial bus (USB) storage, universal Flash (UFS) device, compact Flash (CF) cards, smart media (SM) cards and memory sticks and the like.

In some examples, the memory system 102 may also be configured as part of the following devices, for example: computer, ultra-mobile PC (UMPC), Workstation, netbook, personal digital assistant (PDA), portable computer, network tablet, tablet computer, wireless telephone, mobile phone, smart phone, E-book, portable multimedia player (PMP), portable game machine, navigation system, black box, digital camera, digital multimedia broadcasting (DMB) player, three dimension (3D) TV, smart TV, digital audio recorder, digital audio player, digital picture recorder, digital picture player, digital video recorder, digital video player, memory device in the configuration data center, a device capable of transmitting and receiving information wirelessly, one of the various electronic devices configuring home network, one of various electronic devices configuring a computer network, one of various electronic devices configuring remote information processing network, radio frequency identification (RFID) device, or one of various components configuring a computing system.

Referring back to Fig. 1, the memory system 102 includes one or more memory devices 104 and a memory controller 106. The memory controller 106 may control the memory device 104 in response to a request from the host 108. For example, the memory controller 106 may read data from the memory device 104 and transmit the read data to the host 108; and also receive data to be stored from the host 108 and store it to the memory device 104. That is, the memory controller 106 can control write (or program) operations, read operations, erase operations, background operations and the like on the memory device 104.

Specifically, as shown in Fig.2, the memory controller 106 may include a front-end interface 201, a back-end interface 202, a processor 203, and a memory 204. The above-described components 201, 202, 203, 204 in the memory controller 106 may share transmission signals within the memory controller 106 through an internal bus. In some examples, the front-end interface 201 may interface the host 108 with the memory system 102 in response to a protocol of the host 108, and exchange transmission commands and data operations between the host 108 and the memory system 102. The front-end interface 201 may process commands and data sent by the host 108, and may include at least one of the following: Universal Serial Bus (USB), Multimedia Card (MMC), Peripheral Component Interconnect express (PCI-e or PCIe), Small Computer System Interface (SCSI), Serial SCSI (SAS), Serial Advanced Technology Accessories (SATA), Parallel Advanced Technology Accessories (PATA), Small Computer System Interface (SCSI), Enhanced Small Disk Interface (ESDI) and Electronic Integrated Drive (IDE). In some examples, the front-end interface 201, which is a component of the memory system 102 for exchanging data with the host 108, may be implemented by firmware referred to as a host interface layer (HIL).

The back-end interface 202 may be an interface for transferring commands and data between the memory controller 106 and the memory device 104, allowing the memory controller 106 to control the memory device 104 in response to a request passed from the host 108. The back-end interface 202 may generate controlling signals for controlling memory device 104. In some examples, if the memory device 104 is a NAND flash memory, the back-end interface 202 may write data to or read data from the memory device 104 under the control of the processor 203. The back-end interface 202 may handle commands and data between the memory controller 106 and the memory device 104, such as the operation of the NAND flash interface, in particular the operation between the memory controller 106 and the memory device 104. The back-end interface 202 may be implemented as a component for exchanging data with the memory device 104 by firmware referred to as a Flash Interface Layer (FIL) according to an example.

The processor 203 may be implemented as a microprocessor or a central processing unit (CPU). The memory system 102 may include one or more processors 203. The processor 203 may control all operations of the memory system 102. By way of example, and not limitation, the processor 203 may control a program operation or a read operation on the memory device 104 in response to a write request or a read request from the host 108. According to an example, the processor 203 may use or run firmware to control all operations of the memory system 102. The firmware in this disclosure may be referred to as a flash conversion layer (FTL). The FTL may perform operations as an interface between the host 108 and the memory device 104. The host 108 may transmit requests related to write operations and read operations to the memory device 104 through the FTL. The memory controller 106 uses the processor 203, for example, when performing operations requested from the host 108 in the memory device 104. The processor 203 coupled to memory device 104 may process instructions or commands related to commands from host 108. The memory controller 106 may perform for example foreground command operations corresponding to the commands input from the host 108, such as the programming operations corresponding to writing commands, the reading operations corresponding to reading commands, the erasing/discarding operations corresponding to erasing/discarding commands, and parameter setting operations corresponding to setting parameter commands or setting feature commands having setting commands.

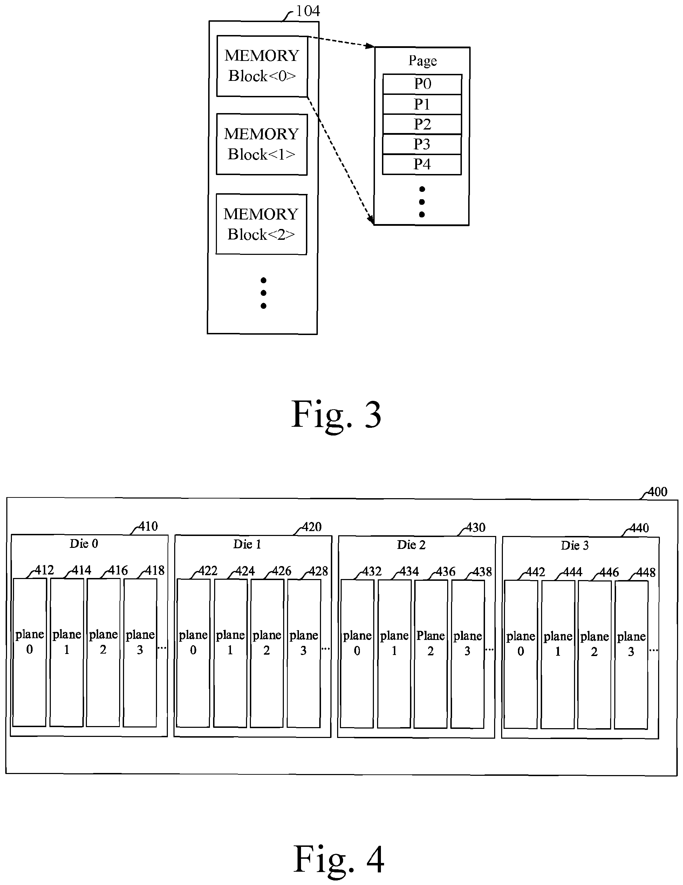

As another example, the memory controller 106 may perform background operations on the memory device 104 by the processor 203. The background operations of the memory device 104, by way of example and not limitation, include garbage collection (GC) operations, wear leveling (WL) operations, mapping clearing operations, and bad block management operations that check or search for bad blocks. The garbage collection operation may include an operation of copying and processing data stored in one of the memory blocks MEMORY Block <0, 1, 2, ... > of the memory device 104 (such as the memory device shown in Fig. 3) into another memory block. The wear leveling operation may include an operation of exchanging and processing the stored data between memory blocks MEMORY Block <0, 1, 2, ... > of the memory device 104. The mapping clearing operation may include an operation of storing the mapping data stored in the memory controller 106 into a memory blocks MEMORY Block <0, 1, 2, ... > of the memory device 104. The bad block management operation may include an operation of checking and processing bad blocks in memory blocks MEMORY Block <0, 1, 2, ... > of memory device 104. It should be noted that the bad block management operation described herein may refer to the management operation for the bad blocks in the memory blocks MEMORY Block <0, 1, 2, ... >, wherein identification of the bad blocks should comply with the industry standards. For example, an optional way is that when written sequentially, if one of the pages P <0, 1, 2, 3, 4, ... > contained in any memory block in memory blocks MEMORY Block <, 0, 1, 2, ... > is bad, the block may be identified as a bad block. Other ways are possible, and the way that the blocks are labeled as bad blocks is not limited in this disclosure. The memory controller 106 may respond to an operation to access the memory blocks MEMORY Block <0, 1, 2, ... > of the memory device 104, wherein the operation to access the memory blocks MEMORY Block <0, 1, 2, ... > of the memory device 104 may include a foreground operation or a background operation performed on the memory blocks MEMORY Block <0, 1, 2, ... > of the memory device 104.

Memory 204 may be a working memory of memory system 102 and memory controller 106, and is configured to store data for driving memory system 102 and memory controller 106. More specifically, the memory 204 may store firmware driven by the processor 203 and data (e.g. metadata) required to drive the firmware when the memory controller 106 controls the memory device 104 in response to a request from the host 108.

The memory 204 may also be a buffer memory of the memory system 102 and the memory controller 106, and is configured to temporarily store write data transmitted from the host 108 to the memory device 104 and read data transmitted from the memory device 104 to the host 108. The memory 204 may include program memory, data memory, write buffer/cache, read buffer/cache, data buffer/cache and mapping buffer/cache for storing write data and read data. The memory 204 may be implemented using volatile memory. The memory 204 may be implemented using static random access memory (SRAM), dynamic random access memory (DRAM) or both.

Although Fig. 2 shows that the memory 204 is included in the memory controller 106, the present disclosure is not limited thereto. In various implementations, the memory 204 may be included external to the memory controller 106, and the memory controller 106 may input/output data to/from the memory 204 through a separate memory interface (not shown).

The memory device 104 may be a non-volatile memory device which may retain data stored therein even if it is not supplied with power. The memory device 104 may store data provided from the host 108 through a write operation. The memory device 104 may also provide the stored data to the host 108 through a read operation. In examples of the present disclosure, the memory device 104 may be any well-known memory, for example, volatile memory devices such as dynamic random access memory (DRAM) and static RAM (SRAM), or non-volatile memory devices such as read-only memory (ROM), mask ROM (MROM), programmable ROM (PROM), erasable programmable ROM (EPROM), electrically erasable programmable ROM (EPROM), ferroelectric RAM (FRAM), phase change RAM (PRAM), magnetoresistive RAM (MRAM), resistive RAM (RRAM or ReRAM) and flash memory (e.g. three-dimensional NAND flash memory).

As shown in Fig. 3, the memory device 104 may include a plurality of memory blocks MEMORY Block <0, 1, 2, ... >. Each memory block may include multiple pages P<0, 1, 2, 3, 4 ... >. Further, although not specifically shown in the drawings, each of the pages P<0, 1, 2, 3, 4 ... > may include a plurality of memory cells. The memory cells are classified into any one of different types of memory blocks such as a single level cell (SLC) memory block and a multi-level cell (MLC) memory block depending on the number of bits that may be stored or represented in a single memory cell. Here, the SLC memory block includes a plurality of pages implemented by memory cells each storing one bit of data. The SLC memory block may have higher data I/O operation performance and higher durability. The MLC memory block includes a plurality of pages implemented by memory cells each storing a plurality of bits of data (e.g. two or more bits). The MLC memory block may have a larger storage capacity for the same space than the SLC memory block. The MLC memory blocks may be highly integrated in terms of storage capacity. In an example, the memory device 104 may be implemented with MLC memory blocks such as MLC memory blocks, trinary level cell (TLC) memory blocks, quad level cell (QLC) memory blocks and combinations thereof. The MLC memory block may include a plurality of pages implemented by memory cells each capable of storing 2 bits of data. A trinary level cell (TLC) memory block may include a plurality of pages implemented by memory cells each capable of storing 3 bits of data. A quad level cell (QLC) memory block may include a plurality of pages implemented by memory cells each capable of storing 4 bits of data. In other examples, the memory device 104 may include memory blocks consisting of memory cells each capable of storing 5 or more bits of data.

According to an example, the memory controller 106 may store data in a plurality of memory blocks MEMORY Block <0, 1, 2, ... > by the processor 203 in certain (e.g. interleaved) manner. That is, the memory controller 106 may write data to a super block.

As for understanding of the super block, FIG. 4 shows an exemplary block diagram of a memory device. Referring to FIG. 4, the memory device 400 (which may be NAND Flash) may include a plurality of memory dies, for example, Die0-410, Die1-420, Die2-430, and Die3-440. Each of Die 0, Die 1, Die 2 and Die 3 may include multiple memory planes. That is, Die0-410 may include a memory plane 0 (plane 0) 412, a memory plane 1 (plane 1) 414, a memory plane 2 (plane 2) 416 and a memory plane 3 (plane 3) 418. Diel-420 may include a memory plane 0 (plane 0), a memory plane 1 (plane 1) 424, a memory plane 2 (plane 2) 426 and a memory plane 3 (plane 3) 428. Die 2-430 may include a memory plane 0 (plane 0) 432, a memory plane 1 (plane 1) 434, a memory plane 2 (plane 2) 436 and a memory plane 3 (plane 3) 438. Die 3-440 may include a memory plane 0 (plane 0) 442, a memory plane 1 (plane 1) 444, a memory plane 2 (plane 2) 446 and a memory plane 3 (plane 3) 448. Wherein, each of the memory planes 412, 414, 416, 418, 422, 424, 426, 428, 432, 434, 436, 438, 442, 444, 446 and 448 included in Die 0, Die 1, Die 2 and Die 3 may include multiple memory blocks. Each memory block described here may be correspond to one of the memory block MEMORY Block<0, 1, 2, ...> that includes multiple pages P<0, 1, 2, 3, 4, ...> as shown in Figure 3.

It should be noted that each Die shown in FIG. 4 includes 4 memory planes, which is only an example. In practice, each Die may also include other numbers of memory planes such as 6 memory planes, and the present disclosure does not limit the number of memory planes included in one Die.

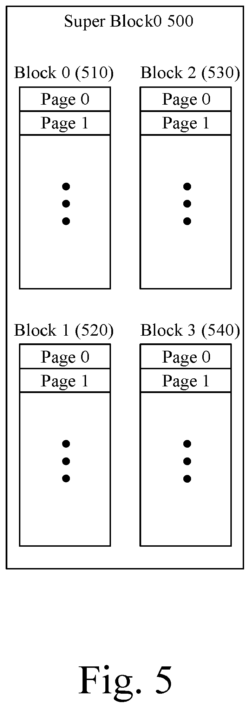

The plurality of memory blocks included in the memory device 104 as shown in FIG. 4 may be divided to a plurality of super blocks. Also, in a write operation, data corresponding to a write command received from for example the aforementioned host 108 may be written and stored into the super block by a one-shot procedure. Each super block, whose exemplary structure may be referred to Fig. 5, for example, a super block 0 500 may include the zeroth block (Block0) 510 included in Die0-410, the first block (Block 1) included in Die 1-420, the second block (Block2) 530 included in Die2-430 and the third block (Block3) 540 included in Die3-440. Although FIG. 5 shows that super blocks 0-550 include four blocks, the present disclosure is not limited thereto.

The plurality of memory blocks included in memory device being divided into super blocks as described above is only exemplary. Different ways of divisions may also be adopted according to different performances of the memory device and user requirements. For example, the division of the super blocks may also be: extracting blocks with the same number from the dies included in the memory device to form a super block.

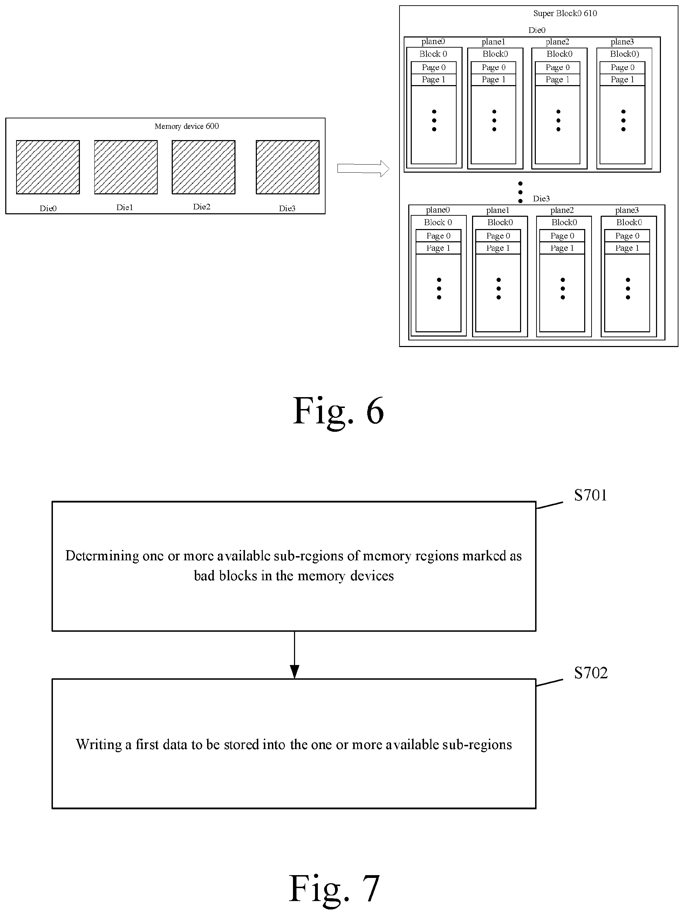

For example, it is supposed that the memory device 600 includes four Dies (Die0, Die1, Die2 and Die3) as shown in fig. 6. Each Die includes four memory planes (plane0, planet, plane2, Plane3); each plane includes a plurality of memory blocks (Block0, Block1, Block2, ..., Blockn); and each block includes a plurality of pages P (Page). In this structure, a super block is formed by extracting blocks with the same number from Dies contained in the memory device. The super block 0610 shown in Fig. 6 includes Block 0 of each plane in each Die of Die0, Die1, Die2 and Die3. Other super blocks are similarly formed.

In practical applications, the super blocks containing too many bad blocks are usually marked as super bad blocks no matter the super blocks are divided in which way.

For example, it is supposed that a super block is formed in the way as shown in Fig. 6. In this case, the way by which a super block is marked as a bad block may be: a super block whose bad blocks account for more than 2/3 of its total blocks is marked as a super bad block. For example, taking the super block shown in Fig. 6 as an example again, a super block is marked as a super bad block when the number of bad blocks in the super block accounts for more than 4/5 of its total blocks. It should be understood that how many bad blocks contained in a super block may cause the super block to be marked as a super bad block may be decided depending on the actual situation and is not limited by this disclosure.

At present, the super blocks marked as super bad blocks are usually discarded and no longer used. But it is found by research that although these super bad blocks cannot be used as a whole, some of these super blocks marked as super bad blocks are not bad and can still be used.

Based on this, the embodiments of the present disclosure provide an operating method of a memory system to use available memory regions in these super blocks marked as super bad blocks to improve the using efficiency of NAND Flash.

Particularly, as shown in Fig. 7, the embodiments of the present disclosure provide an operating method of a memory system. The memory system may include one or more memory devices. In this structure, the operating method may include:
S701: determining one or more available sub-regions of memory regions marked as bad blocks in the memory devices;
S702: writing the first data to be stored into the one or more available sub-regions.

It should be noted that the structures of the memory system and the memory device referred to herein may be similar with those of the memory system 102 and the memory device 104 as described above, and may also be other structure forms used in practice. The memory region referred to herein may refer to the super block described above, and accordingly the bad block referred to herein may refer to the super bad block. All the bad blocks not specifically explained in the following of the present disclosure may refer to the super bad block. That is, determining one or more available sub-regions contained in the memory region when the memory region is marked as a super bad block. The capacity of the available sub-region comprises the capacity of a memory block. Based on this, S701 may be determining one or more available memory blocks in the super blocks marked as super bad blocks in the memory device.

Regardless of the way of division with which the super block is formed, the technical solution of the present disclosure is applicable to use the available sub-regions in the super blocks marked as super bad blocks. Therefore, in order to clearly explain the technical solution of the present disclosure, the super block is formed as shown in Fig. 6 below without special explanation.

Based on the above descriptions, the technical solution of the present disclosure is to determine one or more available sub-regions (one or more memory blocks) in super blocks marked as super bad blocks in the memory devices.

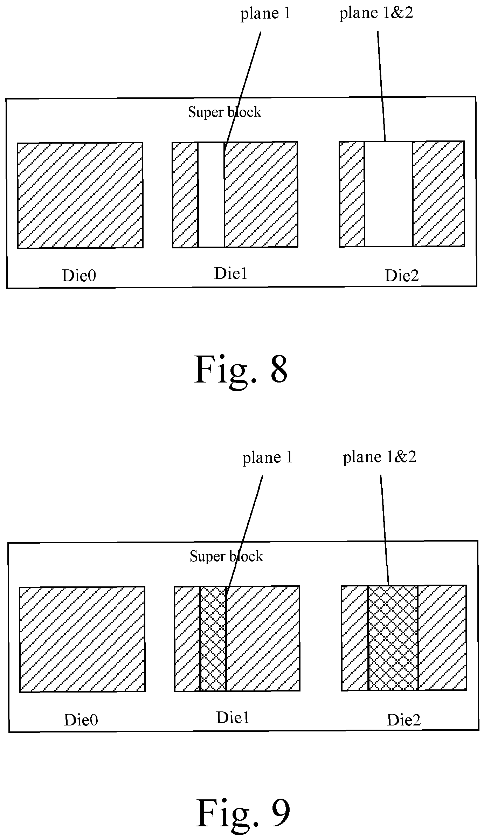

Specifically, please refer to Figs. 8 and 9. Fig. 8 shows an example diagram of a super block marked as a super bad block containing one or more available sub-regions according to embodiments of the present disclosure. Fig. 9 shows a schematic diagram of the usage of the one or more available sub-regions contained in a super block marked as a super bad block according to the embodiments of the present disclosure. In Fig. 8, the super block relates to 3 Dies (DieO, Die1, Die2), wherein each Die contains 4 memory planes (Plane0, Plane1, Plane2, Plane3). The super block may include memory blocks with the same number in each memory plane in each Die. Based on this, the super block may include 12 memory blocks which are in different memory planes but with the same number. The contents shown in Fig. 8 may be: the super block is marked as the super bad block, wherein in the super bad block, there is no available sub-region in Die0, that is, the memory blocks belonging to Die0 contained in the super block are all bad. In other words, there are no available memory blocks belonging to the super block in DieO; there are available memory blocks in plane 1 belonging to Die 1 in the super block; and there are available memory blocks in plane 1 and plane2 belonging to Die2 in the super block. In Fig. 9, the memory controller (Controller) uses the available memory blocks contained in the plane 1 belonging to Die 1 and the available memory blocks contained in the plane 1 and the plane 2 belonging to Die 2 in the super block through a certain algorithm to improve the utilization of the memory devices.

Here, the first data to be stored may be some of the data that the user thinks is not so important but needs to be stored, such as log data generated by serial port (uart), log data generated by debugging (deug log), some system data that is not read very frequently, and so on. These data may also be called non-key data. Accordingly, the data stored in the memory device also includes some key data that the user thinks is more important, such as data written by the user by the host, backup data and so on. It should be understood that which data is important and which data is not important may be different for different electronic devices or memory systems for different purposes. That is, the division of the non-key data and the key data may be designed depending on the actual situation. The present disclosure does not limit the division of the key data and the non-key data.

In some examples, the storage mode of the first data to be stored in the memory device comprises one of a single level cell mode and a multi-level cell mode.

It should be noted that the multi-level cell mode may include any of: a double level cell (DLC), a trinary level cell, a quad level cell, and so on. Alternatively, the multi-level cell mode may include the storage mode of each storing 5 or more bits of data.

Specifically, in some examples, each of the available sub-regions has a corresponding health level, and writing the first data to be stored into the one or more available sub-regions may include:
writing the first data to be stored into the one or more available sub-regions according to a priority order that the health levels of the available sub-regions are from high to low.

It should be noted that when there is only one available sub-region, the first data to be stored may be directly written into the available sub-region without knowing the health level of the available sub-region. It should be understood that the above case is relatively rare. This is because the number of super blocks in the memory device that are marked as super bad blocks is increased gradually with the use of the memory device; besides, the super blocks marked as super bad blocks include multiple memory blocks, and the super blocks may be marked as super bad blocks when more than a certain number of memory blocks are not usable. Therefore, generally, there may be multiple available sub-regions in the super blocks marked as super bad blocks in the memory device. When there are multiple available sub-regions, by taking into account the health level of each of the available sub-regions, the first data to be stored may be written into the one or more available sub-regions in the order of the health levels of the available sub-regions are from high to low.

Here, the higher the health level of the available sub-region is, the better the performance of the available sub-region is, and the higher the stability of the data stored therein is. For the first data to be stored, although it is non-key data, but it is not completely useless. Thus it is desirable that the stability of the first data to be stored can be guaranteed to a certain extent. Therefore, when storing the first data to be stored, the first data to be stored may be written into the one or more available sub-regions according to the priority order of the health levels of the available sub-regions are from high to low. That is, the available sub-regions with high health levels are selected first to store the first data to be stored. When the capacity of the available sub-regions with high health levels is insufficient, the remaining data in the first data to be stored is written into the available sub-regions with secondary high health level, and so on.

Here, the data to be stored is described as the first data to be stored only for convenience of distinguishing the data to be stored (the second data to be stored) described later, and is not to limit by quantity. That is, the number of the first data to be stored may be one or more. Based on this, one or more available sub-regions are needed to write the first data to be stored into the memory devices.

Here, the process of writing the first data to be stored into the one or more available sub-regions may include: the memory controller (Controller) sends a writing command to the memory device; the writing command carries information of the first data to be stored and the storage location of the first data to be stored; the memory device receives the writing command and writes the first data to be stored into the one or more available sub-regions based on the writing command.

In some other examples, each of the available sub-regions has a corresponding health level, and writing the first data to be stored into the one or more available sub-regions may include:
determining a storage level corresponding to the first data to be stored;
writing the first data to be stored into the available sub-regions of a corresponding health level based on the storage level.

It should be noted that this is another way to write the first data to be stored into the available sub-regions. In this case, the data to be written into the available sub-regions is also classified by storage level, and the data of each storage level may be stored in the available sub-regions of the corresponding health level. The corresponding relationship between the storage level and the health level may be: one storage level may correspond to one or more health levels; one health level may correspond to one or more storage levels. That is, since the classification criterion of the storage level and that of the health level may be different in practical application, the number of the storage level and that of the health level may be the same or different. Therefore, the corresponding relationship between the storage level and the health level described above is also varied accordingly and may be selected according to the actual situation.

One practicable corresponding relationship may be as follows: the health level and the storage level may be of one-to-one correspondence. For example, it is assumed that the storage level of data to be stored in the available sub-regions may be divided into a first-level storage, a second-level storage and a third-level storage; and the health level of the available sub-regions may be divided into a first-level health, a second-level health and a third-level health. If the storage level corresponds to the health level one by one, one kind of corresponding relationship may be as follows: the first-level storage corresponds to the first-level health; the second-level storage corresponds to the second-level health; and the third-level storage corresponds to the third-level health. Or other one-by-one correspondence is possible.

Another practicable corresponding relationship may be as follows: the first-level storage corresponds to the first-level, the second-level and the third-level health; the second-level storage corresponds to the second-level and the third-level health; and the third-level storage corresponds to the third-level health. According to the pre-stored corresponding relationship, the corresponding relationship may be as follows: assuming that the level of the first-level, the second-level and the third level storage is decreased sequentially, i.e., the level of the first-level storage is the highest, and the higher the storage level is, the more important the data is; and assuming that the level of the first-level, the second-level and the third-level health is also decreased sequentially, that is, the level of the first-level health is the highest. In this case, the data of the third-level storage may be stored at any of the three health levels. The data of the second-level storage may be stored in the first-level health or the second-level health; and so on, the data of the first-level storage may be stored in the first-level health.

It should be noted that the above two corresponding relationships are only examples. In a specific memory device, it can be planned according to the actual situations.

As for some rules for planning the storage levels, in some examples, determining a storage level corresponding to the first data to be stored may comprise one of:
determining the storage level to which the first data to be stored belongs according to an importance degree;
determining the storage level to which the first data to be stored belongs according to a reading frequency;
determining the storage level to which the first data to be stored belongs according to a writing order.

It should be noted that, firstly, the data to be stored in the available sub-regions needs to be divided into different storage levels according to a division criterion for the storage level, and then the storage level of the first data to be stored is determined. The division of storage levels is not limited to the above manners: dividing the storage levels according to the importance degree, reading frequency, and writing order. Correspondingly, the manner of determining the storage level of the first data to be stored includes but is not limited to: determining the storage level of the first data to be stored according to the importance degree of the first data to be stored; determining the storage level of the first data to be stored according to the reading frequency of the first data to be stored; determining the storage level of the first data to be stored according to the writing order of the first data to be stored. When the storage level is divided according to the importance degree, the greater the importance degree of the data is, the higher the corresponding storage level is. When the storage level is divided according to reading frequency, the faster the data is read, the higher the corresponding storage level is. When the storage level is divided according to the writing order, the earlier the data is written, the higher the corresponding storage level is.

Based on this, in some examples, writing the first data to be stored into the available sub-regions of the corresponding health level according to the storage level may include:
obtaining a first mapping relationship, wherein the first mapping relationship comprises a corresponding relationship between the storage level and the health level;
writing the first data to be stored into the available sub-regions of the corresponding health level based on the first mapping relationship and the storage level corresponding to the first data to be stored.

It should be noted that the first mapping relationship may be a pre-stored mapping table, for example, the mapping relationship in the form of tables in which the first-level storage corresponds to the first-level health, the second-level storage corresponds to the second-level health, and the third storage corresponds to the third-level health, as described in the foregoing example. The first mapping relationship may also be a corresponding relationship between the storage levels of the data that is dynamically established according to preset rules based on the respective corresponding health levels of the currently available sub-regions of the memory device. For example, it is assumed that the health levels corresponding to the available sub-regions of the memory device include the first-level health, the second-level health, and third-level health whose level is decreased sequentially; the storage levels include the first-level storage, the second-level storage, and the third-level storage whose level is decreased sequentially; and the preset rules may be that the data of the first-level storage could be stored in the available sub-region of the highest health level, the data of the second-level storage could be stored in the available sub-regions with health level higher than the lowest health level, and the data of the third-level storage could be stored in the available sub-regions of any health level. At this time, the first mapping relationship includes: the first-level storage corresponds to the first-level health; the second-level storage corresponds to the first-level health and second-level health; and the third-level storage corresponds to the third-level health, the second-level health, and first-level health. For another example, it is assumed the health levels corresponding to the available sub-regions in the memory device include the first-level health and second-level health whose level is decreased sequentially, the storage level and the preset rule are the same as the previous example. At this time, the first mapping relationship includes: the first-level storage corresponds to the second-level health; the second-level storage corresponds to the second-level health; and the third-level storage corresponds to the second-level health and the first-level health.

It should be understood that the above descriptions are only examples, no matter that the first mapping relationship is a preset (fixed) mapping table or a dynamic mapping table. Specifically, the corresponding relationship between the storage level and the health level included in the first mapping relationship may be designed according to the actual situation. That is, any technical solutions for storing data in the available sub-region according to the first mapping relationship including the corresponding relationship between the storage level and the health level should include the technical solutions described in the present disclosure and thus will not be repeated herewith.

After obtaining the first mapping relationship, the first data to be stored is written into the available sub-regions of the corresponding health level according to the first mapping relationship.

The above contents describe how to divide the storage level of data and how to obtain the corresponding relationship between the storage level and the health level. In some examples, obtaining the health level of the available sub-regions may further include:
evaluating each of the available sub-regions to determine a health status of each of the available sub-regions;
determining health levels of the available sub-regions based on the health status of each of the available sub-regions.

Wherein, evaluating each of the available sub-regions to determine the health status of each of the available sub-regions may include:
determining an erase count of each of the available sub-regions and/or a usable lifetime of each of the available sub-regions;
determining the health status based on the erase count and/or the usable lifetime;
wherein the smaller the erase count and/or the longer the usable lifetime is, the better the health status is.

It should be noted that the ways to evaluating of the health status of the available sub-regions in practical applications includes but is not limited to the above several ways. The above-mentioned ways are described separately below.

Way 1: the health status of the available sub-regions may be evaluated according to the erase count (EC) of the available sub-regions. The more the erase count of available sub-regions, the worse the health status of the corresponding available sub-regions is; and the less the erase count of the available sub-region, the better the health status of the corresponding available sub-region is. The recording of the erase count may be accomplished by a counter in the memory controller counting erase commands sent by the memory controller to the corresponding available sub-regions. The counter may be set specifically for recording the erase counts, or may be shared with counters in other functions. The disclosure does not restrict the acquisition of erase count.

Way 2: the health status of the available sub-region may be evaluated according to the usable lifetime (or remaining lifetime) of the available sub-regions. The longer (larger) the usable lifetime is, the better the health status of the corresponding available sub-regions is; while the shorter (smaller) the usable lifetime is, the worse the health status of the corresponding available sub-regions is. The usable lifetime of the available sub-regions can be obtained by the memory controller reading a region storing the internal parameters in the memory device, i.e., obtained by reading directly. In practical applications, the usable lifetime of the available sub-regions may be measured according to how many times the available sub-regions may be erased. Base on this, the usable lifetime of the available sub-regions may also be determined by first obtaining the whole lifetime (count for how many times erasure may be performed in total) of the memory devices of this type, and then subtracting the obtained erase count from the whole lifetime.

Way 3: the health status of available sub-regions may be evaluated according to both the erase count and usable lifetime. The step of separately evaluating according to the erase count and usable lifetime may be as above. Here, the evaluation according to the erase count and usable lifetime may be mutually detected. In other words, if the erase count and the usable lifetime are obtained correctly, then the health status of the available sub-regions using the above two ways of evaluating is consistent. If the erase count and the usable lifetime are obtained incorrectly, then the health status of the available sub-regions using the above two ways of evaluating is inconsistent. Therefore, the way 3 can reduce the risk of misjudging.

After the health status of each available sub-region is obtained, the health level of the available sub-regions is determined based on the health status of each of the available sub-regions.

In particular, determining the health level of each of the available sub-regions based on the health status of each of the available sub-regions may include:
obtaining a second mapping relationship, wherein the second mapping relationship comprises a corresponding relationship between the health status and the health level;
determining the health level of each of the available sub-regions according to the second mapping relationship and the health status of each of the available sub-regions.

It should be noted that the second mapping relationship, like the first mapping relationship, may also be a pre-stored mapping table. For example, the mapping table contains the corresponding relationship between erase count and health level. For example, the corresponding health level is the first-level health when the erase count is 0; the corresponding health level is the second-level health when the erase count is 1; and so on. Wherein, the level of the first-level health, the second-level health... is decreased sequentially. For another example, the mapping table may include a corresponding relationship between the interval formed with erase count and the health level. For example, the corresponding health level is the first-level health when the erase count varies from 0-5; the corresponding health level is the second-level health when the erase count varies from 6-10; and so on. Wherein, the level of the first-level health, the second-level health... is decreased sequentially. The partition interval here may be equal spacing or non-equal spacing according to the actual needs of the design.

Based on the foregoing description of the first mapping relationship, the second mapping relationship may also be a corresponding relationship between the health levels that is dynamically established according to set rules based on the respective corresponding health status of the currently available sub-regions of the memory device. For example, the set rules may be that the health level of the available sub-regions for which the percentage between erase count and whole lifetime is less than 20% (health status is better) in the available sub-regions currently existing in the memory device is the first-level health, the health level of the available sub-regions for which the percentage between erase count and whole lifetime is between 20% and 80% is the second-level health, and the health level of the available sub-regions for which the percentage between erase count and whole lifetime is more than 80% is the third-level health. Wherein, the level of the first-level health, the second-level health, ..., is decreased sequentially.

It should be understood that the above descriptions are only examples, no matter that the second mapping relationship is a preset (fixed) mapping table or a dynamic mapping table. Specifically, the corresponding relationship between the health status and the health level included in the second mapping relationship may be designed according to the actual situation. That is, any technical solution for storing data in the available sub-regions according to the second mapping relationship including the corresponding relationship between the health status and the health level should include the technical solution described in the present disclosure and thus will not be repeated here. It should be noted that the health level of each available sub-region is not fixed. With the use of the available sub-regions, the erase count of the available sub-regions increases and the usable lifetime of the available sub-regions decreases, the health status of the available sub-region is dynamically changed. Thus, the health level of the available sub-regions may be periodically re-determined according to the second mapping relationship.

In some examples, the operating method further comprises:
maintaining a management table, wherein the management table is configured to record management information on the available sub-regions in the memory regions marked as bad blocks, and wherein the management information comprises at least address information of the available sub-regions.

It should be noted that the numbers of bad blocks in the memory device increases as the use of the memory device. Accordingly, the number of available sub-regions will also increase. That is, there is no super block marked as a super bad block in the memory device at the beginning and there is no available sub-region at this time. With the use of the memory device, the number of super blocks marked as super bad blocks increases, and the number of available sub-regions in these super blocks also increases. In order to facilitate the use of these available sub-regions, the present disclosure provides an implementable way of maintaining a management table which is configured to record management information of available sub-regions in the memory regions marked as bad blocks, wherein the management information includes at least address information of the available sub-regions. The memory controller (Controller) may write the first data to be stored into the available sub-regions based on the address information. The address information may include an address number corresponding to a bad block to which the available sub-regions belong and an offset address of the available sub-regions in the bad block to which the available sub-regions belong.

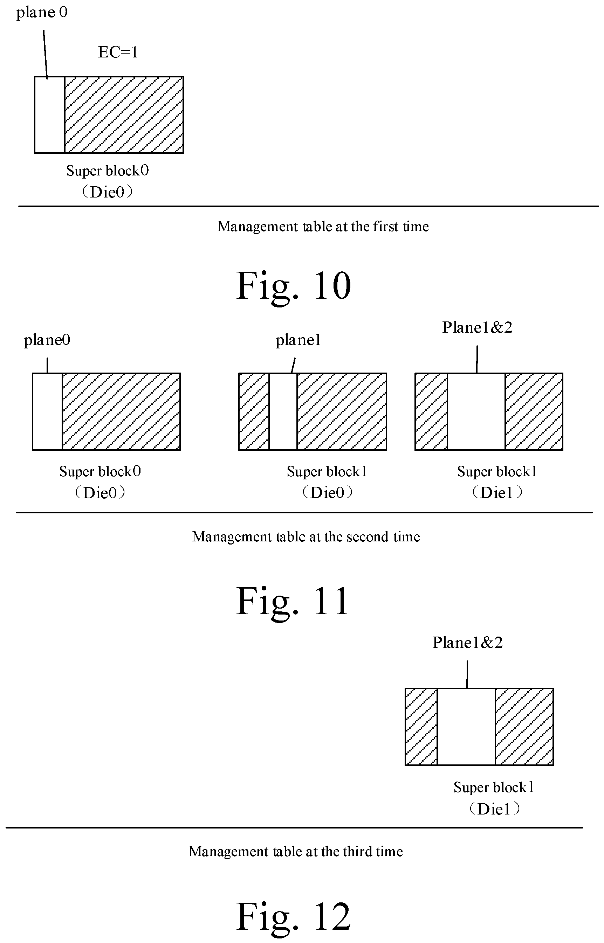

In particular, the dynamic maintenance of the management table may be illustrated as shown in figs. 10-12. Wherein Fig. 10 shows the available sub-regions managed in the management table at a first time according to the embodiments of the present disclosure. Fig. 11 shows the available sub-regions managed in the management table at a second time according to the embodiments of the present disclosure. Fig. 12 shows the available sub-regions managed in the management table at a third time according to the embodiments of the present disclosure. Wherein the first time is before the second time, and the second time is before the third time. That is, there are not many super blocks marked as super bad blocks in the memory device at the first time because the memory device has just started to be used or has just been used. For example, as shown in Fig. 10, the super blocks marked as super bad blocks include super block 0, in which only the memory blocks contained in plane0 of Die0 are usable, while the memory blocks contained in other planes of Die0 and memory blocks of other Die in super block 0 are bad and cannot be used. Thereafter, as shown in Fig. 11, the number of super blocks marked as super bad blocks increases with the use of the memory device so that the number of available sub-regions increases. Thus, the number of available sub-regions increases at the second time so that the available sub-regions to be managed in the management table are also increased. For example, the memory blocks in plane 1 of Die0 and the memory blocks in plane 1 & plane 2 of Die1 in the super block1 are added. In the operation of the technical solution of the present disclosure, the available sub-regions may also be excluded from the management when set conditions are satisfied, so that the number of available sub-regions in the management table decreases. I.e. at the third time, as shown in Fig. 12, only the memory blocks in plane1 & plane2 of Die1 in the super block 1 (i.e., the memory blocks included in plane1 & plane2) are left as available sub-regions. The set conditions are described in detail below and will not be repeated here.

In some examples, maintaining the management table may include:
updating, into the management table, the management information on the available sub-regions that are newly added;
deleting, from the management table, the management information on the available sub-regions that satisfy a set condition in the management table.

It should be noted that the available sub-regions that are newly added mentioned here may refer to one or more available sub-regions in the memory regions just been marked as bad blocks. The available sub-regions that satisfy the set condition mentioned here may include, but are not limited to: available sub-regions that cannot be used, available sub-regions for which the data storage time exceeds a certain threshold, etc. Wherein, the available sub-regions that cannot be used may refer to an available sub-region that cannot store data correctly, for example, an available sub-region whose erase count exceeds a certain threshold and/or whose usable lifetime is less than a certain threshold. That is, the management table is a dynamically changing table that manages newly added available sub-regions and deletes available sub-regions that satisfy set conditions. In other words, the available sub-regions contained in the management table may include: available sub-regions which are newly added and unused, and available sub-regions which are used with erase count not beyond a certain threshold and/or the usable lifetime is greater than a certain threshold and the data storage time not exceeding a certain threshold. That is, for the available sub-regions that have stored data in the management table, after each time the stored data is erased, it is determined according to the foregoing whether the erase count of the available sub-regions exceeds the certain threshold and/or whether the usable lifetime is less than the certain threshold. If the erase count exceed the certain threshold and/or the usable lifetime is less than the certain threshold, the management information on the available sub-regions is deleted from the management table. If the erase count do not exceed the certain threshold and/or the usable lifetime is greater than the certain threshold, and the data storage time does not exceed the certain threshold, the management information on the available sub-regions is still in the management table, that is, the available sub-regions are still managed in the management table.

Here, the management table may be a linked list. The linked list may be non-continuous in physical storage. The logical order of the stored data elements is connected through the pointers in the linked list to realize a linear storage structure. The structure may be composed of a series of nodes, each node includes two parts: the first part is a data field, which is used to store the management information; the second part is a pointer field, which is used to store the first address pointing to the location where the next node stores the management information.

For the storage of the management table, in some examples, the management table is stored in the memory controller and/or the memory device. That is, the management table may be stored in the buffer of the memory controller and/or in the memory array included in the memory device.

In some examples, the operating method further comprises:
determining a storage requirement of a second data to be stored;
checking the management table when it is determined that the storage requirement of the second data to be stored is that the second data to be stored need to be stored in the available sub-regions;
storing the second data to be stored in the available sub-regions if the available sub-regions exist in the management table;
storing the second data to be stored in a first memory region that does not contain a bad block mark if the available sub-regions do not exist in the management table.

It should be noted that the above processing steps of evaluation the health level of the available sub-regions and dividing the storage levels of the data are some processing of how the first data to be stored is written into the available sub-regions after the storage requirement of the first data to be stored has been determined as it needs to be stored in the available sub-regions. For any second data to be stored in the memory controller, firstly, the storage requirement of the second data to be stored is determined, and then the corresponding storage processing is carried out according to the different storage requirements. Here, the storage requirements may be roughly classified into: stored in the available sub-regions; or not stored in the available sub-regions.

Specifically, checking the management table if it is determined that the storage requirement of the second data to be stored is that the second data to be stored need to be stored in the available sub-regions; storing the second data to be stored in the available sub-regions if the available sub-regions exist in the management table; storing the second data to be stored in the first memory region that does not contain a bad block mark if the available sub-regions do not exist in the management table. Wherein the first memory region here is a memory region in the memory device that is not marked as a super bad block, which may be a super block. That is, if there are available sub-regions in the management table, the second data to be stored is stored in the available sub-regions. If there are no available sub-regions in the management table, the second data to be stored is stored in the first memory region in an unmarked super bad block (good) memory in the memory device.

In some examples, the operating method further comprises:
storing the second data to be stored in a second memory region that does not contain the bad block mark when it is determined that the storage requirement of the second data to be stored is that the second data to be stored should not be stored in the available sub-regions.

That is, the second data to be stored is stored in a second memory region in the memory device that is not marked as a super bad block when the storage requirement of the second data to be stored is that it cannot be stored in available sub-regions in the super bad blocks. The second memory region and the first memory region are only for the convenience of distinguishing memory regions in the two different processes. The second memory region and the first memory region can be the same one or different ones, which is not limited in this disclosure. It should be noted that the meanings of the first memory region and the second memory region may be the same as that of the aforementioned memory region marked as the super bad block, i.e., the capacity of the first memory region and the second memory region may be one or more of the capacity of the super blocks. The meanings of the first memory region and the second may also be different from that of above-mentioned memory region marked as super bad block, i.e., the capacity of the first memory region and the second memory region may be different from the capacity of the super block, which may be larger or smaller, and may be designed according to the actual situation.

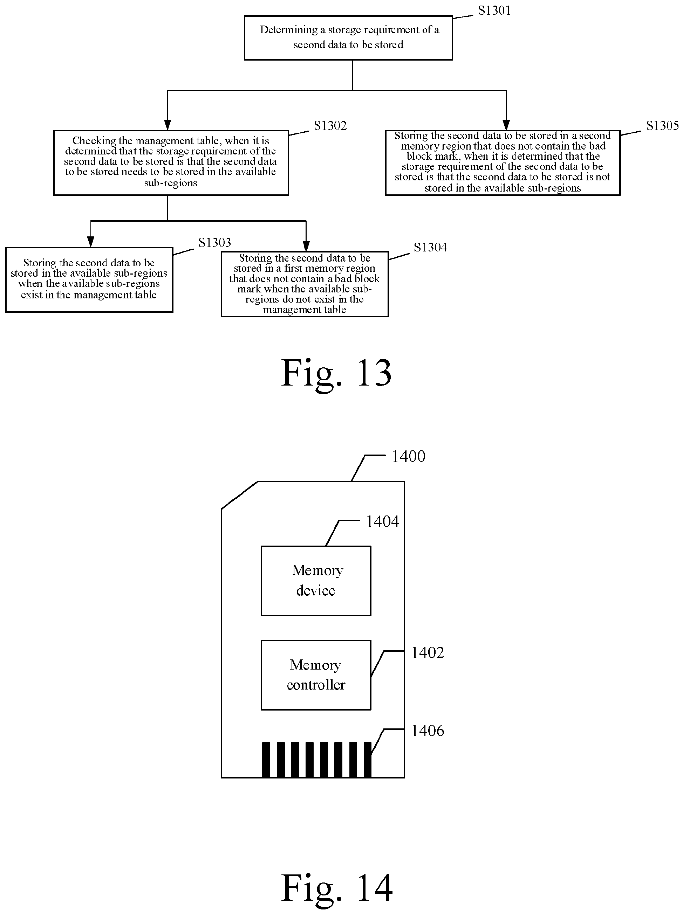

In order to understand the above description of the storage of any second data to be stored, the specific flow as shown in Fig. 13 is as follows:
S1301: determining a storage requirement of the second data to be stored;
S1302: checking the management table when it is determined that the storage requirement of the second data to be stored is that the second data to be stored needs to be stored in the available sub-regions;
S1303: storing the second data to be stored in the available sub-regions when the available sub-regions exist in the management table;
S1304: storing the second data to be stored in a first memory region that does not contain a bad block mark when the available sub-regions do not exist in the management table;
S1305: storing the second data to be stored in a second memory region that does not contain the bad block mark when it is determined that the storage requirement of the second data to be stored is that the second data to be stored is not stored in the available sub-regions.

It should be noted that the specific implementation of each of the steps S1301 to S1305 has been described in detail above and will not be repeated here.

The present disclosure provides an operating method of a memory system to improve memory utilization by determining one or more available sub-regions of memory regions marked as super bad blocks and writing the first data to be stored into the one or more available sub-regions, i.e., utilizing the available portions of partially defective memory regions. This operating method may be implemented by an algorithm only in the memory controller to re-plan the use of super blocks marked as super bad blocks that should have been discarded, thus to improve the use efficiency of the memory device (e.g. NAND flash), to improve the utilization of the memory device and reduce the wear of the memory device.

The embodiments of the present disclosure also provide a memory system that may include:
a memory device configured to store data;
a memory controller coupled to the memory device, which is configured to:
   determine one or more available sub-regions of memory regions marked as bad blocks in the memory device; and
   write a first data to be stored into the one or more available sub-regions.

In some examples, wherein each of the available sub-regions has a corresponding health level, and the memory controller is further configured to: write the first data to be stored into the one or more available sub-regions according to a priority order that the health levels of the available sub-regions are from high to low.

In some examples, wherein each of the available sub-regions has a corresponding health level, and the memory controller is further configured to:
determine a storage level corresponding to the first data to be stored; and
write the first data to be stored into the available sub-regions of a corresponding health level based on the storage level.

In some examples, the memory controller is further configured to:
evaluate each of the available sub-regions to determine a health status of each of the available sub-regions; and
determine health levels of the available sub-regions based on the health status of each of the available sub-regions.

In some examples, wherein the memory controller is further configured to one of:
determine the storage level to which the first data to be stored belongs according to an importance degree
determine the storage level to which the first data to be stored belongs according to a reading frequency;
determine the storage level to which the first data to be stored belongs according to a writing order.

In some examples, wherein the memory controller is further configured to:
obtain a first mapping relationship, wherein the first mapping relationship is a corresponding relationship between the storage level and the health level that is formed according to a first preset rule; and
write the first data to be stored into the available sub-regions of the corresponding health level based on the first mapping relationship and the storage level corresponding to the first data to be stored.

In some examples, wherein the memory controller is further configured to: determine an erase count of each of the available sub-regions and/or a usable lifetime of each of the available sub-regions; and determine the health status based on the erase count and/or the usable lifetime; wherein the smaller the erase count and/or the longer the usable lifetime is, the better the health status is.

In some examples, wherein the memory controller is further configured to:
obtain a second mapping relationship, wherein the second mapping relationship comprises a corresponding relationship between the health status and the health level; and
determine the health level of each of the available sub-regions according to the second mapping relationship and the health status of each of the available sub-regions.

In some examples, wherein the memory controller is further configured to: maintain a management table, wherein the management table is configured to record management information on the available sub-regions in the memory regions marked as bad blocks, and wherein the management information comprises at least address information of the available sub-regions.

In some examples, wherein the memory controller is further configured to: update the management information on the available sub-regions that are newly added into the management table; and delete, from the management table, the management information on the available sub-regions that satisfy a set condition in the management table.

In some examples, the memory system is contained in one of a solid-state hard disk (SSD) and a memory card.

It should be noted that the memory system is used to perform the operating method described above. The explanation of the steps in operating method has been described in detail above and will not be repeated here.

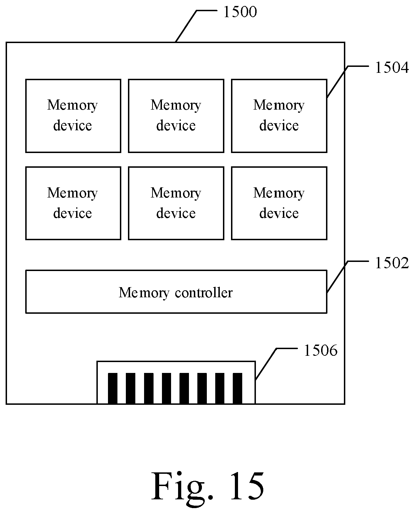

In particular, please refer to Figs. 14-15. Fig. 14 shows a schematic structural diagram of a memory card according to the embodiments of the present disclosure; and Fig. 15 shows a schematic structural diagram of an SSD according to the embodiments of the present disclosure.

In Fig. 14, a memory controller 1402 and a single memory device 1404 may be integrated into a memory card 1400. The memory card may include a PC card (PCMCIA, Personal Computer Memory Card International Association), a CF card, a smart media (SM) card, a memory stick, a multimedia card (MMC, RS-MMC, MMCmicro), an SD card (SD, miniSD, microSD, SDHC), a UFS, and the like. The memory card 1400 may also include a memory card connector 1406 that couples the memory card to a host (e.g., the host 108 in Fig. 1).

In Fig. 15, a memory controller 1502 and a plurality of memory devices 1504 may be integrated into an SSD 1500. The SSD may also include an SSD connector 1506 that couples the SSD to a host (e.g. the host 108 in Fig. 1). In some implementations, the storage capacity and/or operating speed of the SSD is greater than that of the memory card.

The embodiments of the present application also provide an electronic device includes:
a memory system that includes :
one or more memory devices configured to store data; and
a memory controller coupled to the memory devices and configured to control the memory devices;
wherein the memory controller is configured to: determine one or more available sub-regions of memory regions marked as bad blocks in the memory device; and write a first data to be stored into the one or more available sub-regions; and a host coupled to the memory system and configured to control the memory system.

It should be noted that the electronic device belongs to the same inventive concept as the power supply circuit and supplying method of the memory described above. The electronic device comprises the aforementioned memory system, therefore the terms used here have been explained in detail above and are equally applicable and will not be repeated here. It should be understood that only the structures most relevant to the technical solutions of present disclosure are described herein. The electronic device provided by the present disclosure is also included and applicable to the structure and description of the electronic device as shown in Fig. 1. The electronic device also includes structures not shown but necessary for the normal operation of the electronic device, which are not repeated in this disclosure in view of the length of the application documents.

The embodiments of the present disclosure also provide a computer-readable storage medium having stored thereon computer programs, which, when executed by a processor, perform the steps of the methods described in any one of the above. The aforementioned storage medium includes a mobile storage device, a Read-Only Memory (ROM), a Random Access Memory (RAM), a magnetic disk, an optical disc and other media capable of storing program codes.

It should be noted that, in several examples provided in the present disclosure, the disclosed device and method may be realized by other way. The device embodiments described above are only illustrative. For example, the classification of the units is only a logical functional classification. In practice, there may be additional classification to performed, for example, multiple units or components may be combined or may be integrated into another system, or some features may be ignored or not performed. Moreover, the coupling or direct coupling or communication connection between the components shown or discussed may be indirect coupling or communication connection through some interfaces, devices or units, and they may be electrical, mechanical or other form.

The units described above as separate components may or may not be physically separated. The components displayed as units may or may not be physical units, either located in one place or distributed across a plurality of network units. A part or all of the units may be selected according to the actual needs to realize the purpose of the embodiments.

In addition, each functional unit in each embodiment of the present disclosure may be all integrated in one processing unit, or each unit may be separately as a unit, or two or more units may be integrated in one unit. The integrated unit may be realized either in the form of hardware or in the form of hardware and software functional unit.

Those skilled in the art will appreciate that all or part of the steps for implementing the above embodiments may be accomplished by program instructions-related hardware. The foregoing program may be stored in a computer readable storage medium and the program, when executed, performs the steps including the above method embodiments. The aforementioned storage media includes a mobile storage device, a Read-Only Memory (ROM), a Random Access Memory (RAM), a magnetic disk, an optical disc and other media capable of storing program codes.

Alternatively, the integrated units of the present disclosure may be stored in a computer readable storage medium if implemented in the form of software functional modules and sold or used as stand-alone products. Based on this understanding, the technical solutions of the embodiments of the present disclosure essentially or the portion that contribute to the prior art may be embodied in the form of a software product that is stored in a storage medium and includes instructions for causing a computer device (which may be a personal computer, server, or a network device, etc.) to perform all or part of the methods of various embodiments of the present disclosure. The aforementioned storage medium includes a mobile storage device, a ROM, a RAM, a magnetic disc, an optical disc and other media capable of storing program codes.

The above description is intended to be illustrative and not restrictive. For example, the above instances (or one or more aspects) may be used in combination with each other. Other embodiments may be used such as those may be used by the ordinary skill in the art upon reading the above description. It should be understood that it will not be used to interpret or limit the scope or meaning of the claims. Further, various features may be combined in the above detailed description to simplify the present disclosure. This should not be construed as implying that unprotected public features are essential to any claim. Rather, the disclosed subject matter may lie in fewer than all features of a particular disclosed embodiment. Thus, the appended claims are incorporated in the detailed description, wherein each claim is independently as a separate embodiment and it is contemplated that these embodiments may be combined with one another in various combinations or substitutions. The scope of the present disclosure should be determined with reference to the appended claims and the full scope of the equivalents of these claims.

## Claims

1. An operating method of a memory system comprising one or more memory devices, the operating method comprising:
determining one or more available sub-regions of memory regions marked as bad blocks in the memory devices; and
writing a first data to be stored into the one or more available sub-regions.

2. The operating method of claim 1, wherein each of the available sub-regions has a corresponding health level, and writing the first data to be stored into the one or more available sub-regions comprises:
writing the first data to be stored into the one or more available sub-regions according to a priority order that the health levels of the available sub-regions are from high to low.

3. The operating method of claim 1, wherein each of the available sub-regions has a corresponding health level, and writing the first data to be stored into the one or more available sub-regions comprises:
determining a storage level corresponding to the first data to be stored; and
writing the first data to be stored into the available sub-regions of a corresponding health level based on the storage level.

4. The operating method of claim 2 or 3, wherein the operating method further comprises:
evaluating each of the available sub-regions to determine a health status of each of the available sub-regions; and
determining health levels of the available sub-regions based on the health status of each of the available sub-regions.

5. The operating method of claim 3, wherein determining the storage level corresponding to the first data to be stored comprises one of:
determining the storage level to which the first data to be stored belongs according to an importance degree;
determining the storage level to which the first data to be stored belongs according to a reading frequency;
determining the storage level to which the first data to be stored belongs according to a writing order.

6. The operating method of claim 5, wherein writing the first data to be stored into the available sub-regions of the corresponding health level based on the storage level comprises:
obtaining a first mapping relationship, wherein the first mapping relationship comprises a corresponding relationship between the storage level and the health level; and
writing the first data to be stored into the available sub-regions of the corresponding health level based on the first mapping relationship and the storage level corresponding to the first data to be stored.

7. The operating method of claim 4, wherein evaluating each of the available sub-regions to determine the health status of each of the available sub-regions comprises:
determining an erase count of each of the available sub-regions and/or a usable lifetime of each of the available sub-regions; and
determining the health status based on the erase count and/or the usable lifetime;
wherein the smaller the erase count and/or the longer the usable lifetime is, the better the health status is.

8. The operating method of claim 4, wherein determining health levels of the available sub-regions based on the health status of each of the available sub-regions comprises:
obtaining a second mapping relationship, wherein the second mapping relationship comprises a corresponding relationship between the health status and the health level; and
determining the health level of each of the available sub-regions according to the second mapping relationship and the health status of each of the available sub-regions.

9. The operating method of claim 1, wherein the operating method further comprises:
maintaining a management table, wherein the management table is configured to record management information on the available sub-regions in the memory regions marked as bad blocks, and wherein the management information comprises at least address information of the available sub-regions.

10. The operating method of claim 9, wherein maintaining the management table comprises:
updating, into the management table, the management information on the available sub-regions that are newly added; and
deleting, from the management table, the management information on the available sub-regions that satisfy a set condition in the management table.

11. The operating method of claim 1, wherein a capacity of the available sub-regions comprises a capacity of one memory block.

12. The operating method of claim 10, wherein the management table is stored in at least one of a memory of the memory controller and the memory devices.

13. The operating method of claim 9, wherein the operating method further comprises:
determining a storage requirement of a second data to be stored;
checking the management table when it is determined that the storage requirement of the second data to be stored is that the second data to be stored can be stored in the available sub-regions;
storing the second data to be stored in the available sub-regions when the available sub-regions exist in the management table; and
storing the second data to be stored in a first memory region that does not contain a bad block mark when the available sub-regions do not exist in the management table.

14. The operating method of claim 13, wherein the operating method further comprises:
storing the second data to be stored in a second memory region that does not contain the bad block mark when it is determined that the storage requirement of the second data to be stored is that the second data to be stored should not be stored in the available sub-regions.

15. The operating method of claim 1, wherein a storage mode in the memory devices of the first data to be stored comprises one of a single level cell (SLC) mode and a multi-level cell (MLC) mode.

16. A memory system comprising:
a memory device configured to store data;
a memory controller coupled to the memory device and configured to:
determine one or more available sub-regions of memory regions marked as bad blocks in the memory device; and
write a first data to be stored into the one or more available sub-regions.

17. The memory system of claim 16, wherein each of the available sub-regions has a corresponding health level, and the memory controller is further configured to:
write the first data to be stored into the one or more available sub-regions according to a priority order that the health levels of the available sub-regions are from high to low.

18. The memory system of claim 16, wherein each of the available sub-regions has a corresponding health level, and the memory controller is further configured to:
determine a storage level corresponding to the first data to be stored; and
write the first data to be stored into the available sub-regions of a corresponding health level based on the storage level.

19. The memory system of claim 17 or 18, wherein the memory controller is further configured to:
evaluate each of the available sub-regions to determine a health status of each of the available sub-regions; and
determine health levels of the available sub-regions based on the health status of each of the available sub-regions.

20. The memory system of claim 18, wherein the memory controller is further configured to one of:
determine the storage level to which the first data to be stored belongs according to an importance degree;
determine the storage level to which the first data to be stored belongs according to a reading frequency;
determine the storage level to which the first data to be stored belongs according to a writing order.

21. The memory system of claim 20, wherein the memory controller is further configured to:
obtain a first mapping relationship, wherein the first mapping relationship comprises a corresponding relationship between the storage level and the health level; and
write the first data to be stored into the available sub-regions of the corresponding health level based on the first mapping relationship and the storage level corresponding to the first data to be stored.

22. The memory system of claim 19, wherein the memory controller is further configured to:
determine an erase count of each of the available sub-regions and/or a usable lifetime of each of the available sub-regions; and
determine the health status based on the erase count and/or the usable lifetime;
wherein the smaller the erase count and/or the longer the usable lifetime is, the better the health status is.

23. The memory system of claim 19, wherein the memory controller is further configured to:
obtain a second mapping relationship, wherein the second mapping relationship comprises a corresponding relationship between the health status and the health level; and
determine the health level of each of the available sub-regions according to the second mapping relationship and the health status of each of the available sub-regions.

24. The memory system of claim 16, wherein the memory controller is further configured to:
maintain a management table, wherein the management table is configured to record management information on the available sub-regions in the memory regions marked as bad blocks, and wherein the management information comprises at least address information of the available sub-regions.

25. The memory system of claim 24, wherein the memory controller is further configured to:
update, into the management table, the management information on the available sub-regions that are newly added; and
delete, from the management table, the management information on the available sub-regions that satisfy a set condition in the management table.

26. The memory system of any one of claims 16-18 and 20-25, wherein the memory system is contained in one of a solid-state hard disk (SSD) and a memory card.

27. An electronic device comprising:
a memory system comprising:
one or more memory devices configured to store data; and
a memory controller coupled to the memory devices and configured to control the memory devices;
wherein the memory controller is configured to:
determine one or more available sub-regions of memory regions marked as bad blocks in the memory devices; and
write a first data to be stored into the one or more available sub-regions; and
a host coupled to the memory system and configured to control the memory system.

28. A computer-readable storage medium having stored thereon computer programs, which, when executed by a processor, implement steps of the method of any of claims 1-15.
